(19) Europäisches Patentamt / European Patent Office / Office européen des brevets

(11) **EP 2 724 145 B1**

(12) **FASCICULE DE BREVET EUROPEEN**

(45) Date de publication et mention de la délivrance du brevet:
**16.11.2022 Bulletin 2022/46**

(21) Numéro de dépôt: **12728516.1**

(22) Date de dépôt: **18.06.2012**

(51) Classification Internationale des Brevets (IPC):
**G01N 21/19** *(2006.01)*    **G01N 21/21** *(2006.01)*

(52) Classification Coopérative des Brevets (CPC):
**G01N 21/21; G01N 21/19**

(86) Numéro de dépôt international:
**PCT/EP2012/061585**

(87) Numéro de publication internationale:
**WO 2012/175451 (27.12.2012 Gazette 2012/52)**

(54) **SYSTEME ET PROCEDE D'ANALYSE PAR DETERMINATION D'UN CARACTERE DEPOLARISANT OU DICHROÏQUE D'UN OBJET**

SYSTEM UND VERFAHREN ZUR ANALYSE DURCH BESTIMMUNG EINER DEPOLARISIERENDEN ODER DICHROMATISCHEN MERKMALS EINES OBJEKTS

SYSTEM AND METHOD OF ANALYSIS BY DETERMINING A DEPOLARIZING OR DICHROIC CHARACTER OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2011 FR 1155527**

(43) Date de publication de la demande:
**30.04.2014 Bulletin 2014/18**

(73) Titulaires:
- **Université de Rennes I**
  **35065 Rennes Cedex (FR)**
- **Centre National de la Recherche Scientifique (C.N.R.S.)**
  **75016 Paris (FR)**

(72) Inventeurs:
- **ALOUINI, Mehdi**
  **F-35140 Gosne (FR)**
- **FADE, Julien**
  **F-35700 Rennes (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2003 081 221    US-A1- 2010 103 417**
**US-B1- 6 327 037**

**Description**

La présente invention concerne un système et un procédé d'analyse d'un objet, ou d'un échantillon, par détermination de son caractère dépolarisant ou dichroïque.

On considère qu'un objet présente un caractère dichroïque si celui-ci présente une anisotropie de perte.

L'imagerie polarimétrique trouve des applications dans un nombre important de domaines, et plus particulièrement dans le domaine de l'imagerie biomédicale. L'imagerie polarimétrique repose sur une analyse de la modification de l'état de polarisation d'un faisceau lumineux lorsqu'il est rétrodiffusé (*back-scattered* en anglais) ou transmis (*forward-scattered* en anglais) par un objet, ou un échantillon, à analyser.

En dermatologie par exemple, des images polarimétriques de la peau peuvent permettre de détecter des mélanomes ou des lupus. L'imagerie polarimétrique permet aussi de détecter une irradiation de la peau, bien avant qu'apparaissent les signes cliniques de cette irradiation. Une autre application est l'aide au diagnostic de pathologies sur des tissus biologiques pour la détection du cancer de l'utérus ou encore pour l'analyse de l'état d'avancement de la cirrhose du foie.

Toutes ces techniques reposent sur une connaissance parfaite de l'état polarimétrique du faisceau lumineux projeté sur l'objet, ou l'échantillon, à analyser et sur une mesure précise de l'état de polarisation du faisceau lumineux transmis ou rétrodiffusé par l'objet, ou l'échantillon, à analyser. Une telle approche est difficilement compatible avec l'utilisation d'un guide optique, tel qu'une fibre optique, pour déporter la transmission effective et/ou la réception effective du faisceau lumineux. Cette contrainte limite considérablement les champs d'applications de l'imagerie polarimétrique, notamment en ce qui concerne les diagnostics biomédicaux *in situ* et/ou *in vivo*.

En effet, une fibre optique présente toujours des biréfringences résiduelles qui évoluent notamment en fonction des courbures de la fibre, ce qui est par exemple le cas en imagerie endoscopique, où la fibre subit des contraintes mécaniques de compression et de torsion imprévisibles *a priori.* Ces biréfringences résiduelles induisent des variations non déterministes de l'état polarimétrique du faisceau lumineux lors de sa propagation dans la fibre optique.

De manière à permettre un déport par fibre optique, la demande de brevet publiée sous la référence FR 2 941 047 A1 propose un mécanisme de détermination d'une information de polarisation d'un point de mesure d'un échantillon en utilisant des moyens de rotation de la polarisation disposés en bout de fibre optique du côté de l'échantillon à analyser. Le caractère biréfringent ou dépolarisant de l'échantillon, en un point donné, est alors obtenu par l'analyse statistique de tirs de différents états de polarisation aléatoires en entrée de fibre. Cependant, cette proposition nécessite un temps d'acquisition des mesures incompatible avec les besoins en imagerie temps réel et en imagerie endoscopique.

Le document US2010/0103417 décrit un dispositif de mesure de caractéristiques optiques d'un matériau, ledit dispositif comprenant un système optique, un module d'acquisition d'une information d'intensité lumineuse et un module de traitement.

Il est souhaitable de pallier ces différents inconvénients de l'état de la technique.

Il est notamment souhaitable de fournir une solution qui permette d'effectuer des analyses sur un objet par détermination de tout ou partie du caractère dépolarisant ou dichroïque de tout ou partie de cet objet, que ce soit en espace libre ou par déport grâce à un guide optique tel qu'une fibre optique.

Il est notamment souhaitable de fournir une solution qui permette d'effectuer rapidement de telles analyses.

Il est notamment souhaitable de fournir une solution qui soit applicable aux analyses biomédicales et plus particulièrement à l'imagerie biomédicale.

Il est notamment souhaitable de fournir une solution qui soit applicable aux analyses en milieux hostiles et/ou difficiles d'accès.

Il est notamment souhaitable de fournir une solution qui soit applicable aux analyses d'états de surface et à la classification des matériaux.

Il est notamment souhaitable de fournir une solution qui soit simple à mettre en oeuvre et à faible coût.

L'invention concerne un système d'analyse selon la revendication 1.

Ainsi, en effectuant simplement une vérification de la conservation ou non de l'orthogonalité des états de polarisation par détection du signal à la fréquence de battement, on n'analyse pas, en tant que tels, les états de polarisation du faisceau lumineux résultant de l'illumination de l'objet à analyser ou de la partie de l'objet à analyser. Les analyses réalisées simplement sur la base d'une vérification de la conservation ou non de l'orthogonalité des états de polarisation sont ainsi plus rapides, plus simples à mettre en oeuvre et à moindre coût, car elles ne nécessitent pas de moyens d'analyse de la polarisation à la réception. De plus, l'orthogonalité des états de polarisation n'étant pas sensible aux biréfringences résiduelles des guides optiques, tels que les fibres optiques, les analyses réalisées gagnent en flexibilité par possibilité d'utilisation de tels guides optiques.

Selon un mode de réalisation particulier, les moyens pour obtenir l'information relative au caractère dépolarisant ou dichroïque de l'objet à analyser, ou de ladite partie de l'objet à analyser, comportent des moyens pour déterminer l'amplitude du signal à la fréquence de battement.

Ainsi, il est possible de baser l'analyse sur une quantification du caractère dépolarisant ou dichroïque de l'objet à analyser, ou de la partie de l'objet à analyser.

Selon un mode de réalisation particulier, le dispositif transmetteur est adapté de sorte que les moyens pour illuminer l'objet à analyser, ou ladite partie de l'objet à analyser, effectuent l'illumination via un premier guide optique.

Ainsi, il est possible d'effectuer la mesure dans un environnement dans lequel est situé l'objet à caractériser qui est difficile d'accès.

Selon un mode de réalisation particulier, le dispositif récepteur comporte des moyens pour capter de la lumière et pour transformer un signal lumineux capté en un signal électrique, lesdits moyens étant à bande passante définie en fonction de la fréquence de battement.

Selon un mode de réalisation particulier, le dispositif récepteur comporte des moyens pour recevoir le faisceau lumineux résultant de l'illumination de l'objet à analyser par ledit premier faisceau lumineux via un second guide optique.

Ainsi, il est possible d'effectuer la mesure dans un environnement dans lequel est situé l'objet à caractériser qui est difficile d'accès.

Selon un mode de réalisation particulier, le second guide optique est placé en amont des moyens pour capter de la lumière et pour transformer un signal lumineux capté en un signal électrique.

Selon un mode de réalisation particulier, le système d'analyse comporte des moyens pour générer une image complète ou partielle de l'objet à analyser à partir d'informations relatives au caractère dépolarisant ou dichroïque de plusieurs parties de l'objet à analyser.

Ainsi, il est possible de réaliser des analyses biomédicales de manière simple, rapide et à faible coût, et ce plus particulièrement dans le domaine de l'imagerie biomédicale.

Selon un mode de réalisation particulier, le système d'analyse comporte des moyens pour déterminer des valeurs de contraintes mécaniques ou de température appliquées à l'objet à analyser, à partir d'une information relative au caractère dichroïque de l'objet à analyser.

Ainsi, il est possible de réaliser des analyses de contraintes mécaniques ou de température liées à un environnement, potentiellement hostile et/ou difficile d'accès, et ce de manière simple, rapide et à faible coût.

Selon un mode de réalisation particulier, le système d'analyse comporte des moyens pour modifier les fréquences optiques constituant ledit premier faisceau lumineux de sorte qu'elles conservent un même écart et des moyens pour classifier l'objet à analyser, ou ladite partie d'objet à analyser, en fonction d'informations relatives au caractère dépolarisant ou dichroïque de l'objet à analyser, ou de ladite partie d'objet à analyser, obtenues pour différents couples respectifs de fréquences constituant ledit premier faisceau lumineux.

Ainsi, il est possible de réaliser des analyses spectro-polarimétriques et de réaliser des analyses d'états de surface ou de classification de matériaux, et ce de manière simple, rapide et à faible coût, du fait que la mesure ne nécessite pas de moyens d'analyse de la polarisation.

L'invention concerne également un procédé d'analyse selon la revendication 10.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un premier mode de réalisation d'un système d'analyse par détermination du caractère dépolarisant ou dichroïque de tout ou partie d'un objet ;
- la Fig. 2 illustre schématiquement un procédé de détermination du caractère dépolarisant ou dichroïque de tout ou partie d'un objet ;
- la Fig. 3 illustre schématiquement un second mode de réalisation d'un système d'analyse par détermination du caractère dépolarisant ou dichroïque de tout ou partie d'un objet ;
- la Fig. 4 illustre schématiquement un troisième mode de réalisation d'un système d'analyse par détermination du caractère dépolarisant ou dichroïque de tout ou partie d'un objet ;
- la Fig. 5 illustre schématiquement un quatrième mode de réalisation d'un système d'analyse par détermination du caractère dépolarisant ou dichroïque de tout ou partie d'un objet.

De manière à déterminer le caractère dépolarisant ou dichroïque d'un objet, que ce soit en espace libre ou par déport grâce à un guide optique tel qu'une fibre optique, il est proposé que l'objet à analyser soit illuminé par un faisceau lumineux constitué de deux fréquences optiques distinctes et à états de polarisation orthogonaux. Les états de polarisation sont dits orthogonaux au sens mathématique du terme, et ainsi deux polarisations circulaires droite et gauche sont orthogonales. Il est ensuite recherché si un signal est présent à une fréquence de battement dans le faisceau lumineux résultant de l'illumination de l'objet à analyser, c'est-à-dire de la transmission (*forward-scattering* en anglais) ou rétrodiffusion (*back-scattering* en anglais) par l'objet à analyser du premier faisceau lumineux constitué de signaux à deux fréquences optiques distinctes et à états de polarisation orthogonaux. Si un signal est présent à cette fréquence de battement, cela signifie que l'orthogonalité entre les états de polarisation des signaux transmis ou rétrodiffusés n'est plus respectée et que l'objet présente un caractère dépolarisant ou dichroïque ; sinon, cela signifie que l'orthogonalité entre les états de polarisation des signaux transmis ou rétrodiffusés est respectée et que l'objet ne présente pas de caractère dépolarisant ou dichroïque. Il convient de noter que l'on cherche uniquement à vérifier si l'orthogonalité des états de polarisation est respectée, et pas à analyser les états de polarisation en tant que tels. Il convient de noter qu'en conséquence, ce principe ne nécessite pas l'utilisation de composants d'analyse polarimétrique à la réception. Il convient de noter que ce principe est aussi applicable sur une partie seulement de l'objet.

De la fibre optique peut être utilisée pour déporter, par rapport à la position de l'objet à analyser, la génération du faisceau lumineux servant à illuminer l'objet à analyser et/ou pour déporter, par rapport à la position de l'objet à analyser, l'analyse du faisceau lumineux résultant de l'illumination de l'objet à analyser. En effet, les biréfringences résiduelles de la fibre optique peuvent entraîner un déphasage des axes de polarisation et/ou une rotation des états de polarisation, mais n'affectent pas l'orthogonalité des états de polarisation. L'orthogonalité des états de polarisation est alors conservée durant le transport du faisceau lumineux par fibre optique. De même, la non-orthogonalité des états de polarisation est conservée durant le transport du faisceau lumineux par fibre optique.

Ainsi, il est détecté si un signal est présent à la fréquence de battement soit directement dans le faisceau lumineux résultant de l'illumination de l'objet à caractériser, soit dans le faisceau lumineux résultant du transport via le guide optique du faisceau lumineux résultant de l'illumination de l'objet à caractériser.

Ainsi, le système d'analyse met en oeuvre une phase de mesure et une phase d'exploitation de mesure, et l'exploitation de toute mesure s'effectue sur la base du respect ou non de l'orthogonalité des états de polarisation, c'est-à-dire sur l'analyse d'un signal à la fréquence de battement, et non sur les états de polarisation euxmêmes.

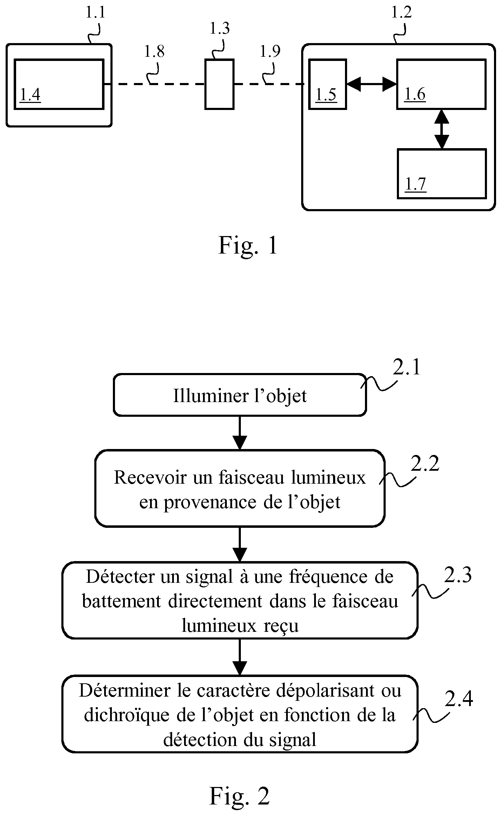

La Fig. 1 illustre schématiquement un premier mode de réalisation d'un système d'analyse par détermination d'un caractère dépolarisant ou dichroïque de tout ou partie d'un objet.

Le système comporte un dispositif transmetteur 1.1 et un dispositif récepteur 1.2. Un objet à analyser 1.3 est placé entre le dispositif transmetteur 1.1 et le dispositif récepteur 1.2, c'est-à-dire qu'un faisceau lumineux 1.8 généré par le dispositif transmetteur 1.1 pour illuminer l'objet 1.3 induit un faisceau lumineux 1.9 transmis par l'objet à analyser 1.3. On entend ainsi que l'objet à analyser 1.3 est placé entre le dispositif transmetteur 1.1 et le dispositif récepteur 1.2, même lorsque le faisceau lumineux 1.9 est issu de la rétrodiffusion du faisceau lumineux 1.8. En d'autres termes, le dispositif transmetteur 1.1 est adapté pour illuminer l'objet à analyser 1.3 et le dispositif récepteur 1.2 est adapté pour recevoir le faisceau lumineux 1.9 transmis ou rétrodiffusé par l'objet à analyser 1.3 suite à l'illumination par le dispositif transmetteur 1.1.

Le dispositif transmetteur 1.1 peut être adapté pour illuminer une partie seulement de l'objet à analyser 1.3 et le dispositif récepteur 1.2 adapté pour recevoir le faisceau lumineux transmis ou rétrodiffusé par cette partie de l'objet à analyser 1.3.

Il faut interpréter le terme *objet* au sens large, celui-ci pouvant être un corps inerte, un échantillon de corps vivant, etc.

Le dispositif transmetteur 1.1 comporte une source de lumière 1.4 qui génère le faisceau lumineux 1.8 servant à illuminer l'objet à analyser 1.3. La source de lumière 1.4 est adaptée pour générer un faisceau lumineux constitué de signaux à deux fréquences optiques distinctes $\nu_1$ et $\nu_2$ et à états de polarisation orthogonaux. Il est rappelé que les états de polarisation sont dits orthogonaux au sens mathématique du terme, et qu'ils ne sont pas nécessairement linéaires.

La source de lumière 1.4 peut comporter deux lasers monomodes, l'un générant le signal à la fréquence $\nu_1$ et l'autre générant le signal à la fréquence $\nu_2$, et combinés de façon à présenter deux polarisations orthogonales.

Dans une variante de réalisation, la source de lumière 1.4 comporte un laser bifréquence oscillant simultanément sur deux modes, selon deux polarisations orthogonales, l'un ayant une fréquence propre correspondant à $\nu_1$ et l'autre ayant une fréquence propre correspondant à $\nu_2$.

Dans une autre variante de réalisation, la source de lumière 1.4 est constituée d'un laser mono-fréquence, de moyens de division, d'un translateur de fréquence et de moyens de recombinaison. L'onde générée par le laser mono-fréquence à la fréquence $\nu_1$ est divisée en deux voies par les moyens de division. L'une des deux voies est décalée en fréquence d'une fréquence $\Delta\nu$ par le translateur de fréquence, puis les deux voies sont recombinées par les moyens de recombinaison avec des états de polarisation orthogonaux.

Le dispositif récepteur 1.2 est adapté pour recevoir le faisceau lumineux 1.9 en provenance de l'objet à analyser 1.3, suite à son illumination par le faisceau lumineux 1.8. Le faisceau lumineux 1.9 présente des états de polarisation résultant de l'incidence de l'objet à analyser 1.3 sur le faisceau lumineux 1.8.

Le dispositif récepteur 1.2 comporte préférentiellement une photodiode 1.5 dont la bande passante est adaptée pour mesurer un signal optique à une fréquence $\Delta\nu$, dite fréquence de battement, prédéfinie en fonction des fréquences $\nu_1$ et $\nu_2$.

On fixe la fréquence de battement comme étant l'écart entre les fréquences $\nu_1$ et $\nu_2$. On a ainsi :

$$\Delta\nu = \nu_1 - \nu_2$$

La photodiode 1.5 peut être remplacée par tout dispositif produisant un signal électrique à partir d'un signal optique et insensible à la polarisation de la lumière. On peut utiliser un photoconducteur, un bolomètre, un détecteur à cascades quantiques, etc. D'une manière plus générale, un tel système dispose de moyens pour capter de la lumière et pour transformer un signal lumineux capté en un signal électrique.

La photodiode 1.5 peut être précédée d'un amplificateur optique ou suivie d'un amplificateur électrique ou d'un amplificateur transimpédance, dont les caractéristiques d'amplification de signal sont prédéfinies.

Le dispositif récepteur 1.2 comporte en outre des moyens 1.6 pour détecter, dans le faisceau lumineux 1.9, un signal à la fréquence de battement $\Delta v$.

Le dispositif récepteur 1.2 comporte en outre des moyens d'analyse 1.7 adaptés pour déterminer le caractère dépolarisant ou dichroïque de l'objet à analyser 1.3, en fonction de la détection ou non d'un signal à la fréquence de battement $\Delta v$.

Si l'objet à analyser 1.3 n'est pas dépolarisant, ou ne présente pas de caractère dichroïque, le faisceau lumineux 1.9 conserve le caractère orthogonal des états de polarisation aux fréquences $v_1$ et $v_2$. Par conséquent, la photodiode 1.5 produit un signal électrique continu. Ce comportement reste valable, même si l'objet à analyser 1.3 introduit une biréfringence et/ou une rotation des états de polarisation.

A l'inverse, si l'objet à analyser 1.3 est dépolarisant, ou s'il présente une anisotropie d'absorption, c'est-à-dire qu'il présente un caractère dichroïque, alors une partie du champ de fréquence $v_1$ associé au premier état de polarisation se projette sur le deuxième état de polarisation de fréquence $v_2$, et *vice versa.* Il en va de même si on considère uniquement une partie de l'objet à analyser 1.3. Il en découle une modulation de l'intensité du signal à la fréquence de battement $\Delta v$. En d'autres termes, si un signal est présent dans le faisceau lumineux 1.9 à la fréquence de battement $\Delta v$, le signal électrique produit par la photodiode 1.5 va présenter une oscillation à cette même fréquence $\Delta v$.

Ainsi, si le signal électrique produit par la photodiode 1.5 est continu, cela signifie que l'objet à analyser 1.3, ou que la partie de l'objet à analyser 1.3, ne présente pas de caractère dépolarisant ou dichroïque ; et si le signal électrique produit par la photodiode 1.5 n'est pas continu, cela signifie que l'objet à analyser 1.3, ou que la partie de l'objet à analyser 1.3, présente un caractère dépolarisant ou dichroïque.

De plus, l'amplitude du signal modulé à la fréquence de battement $\Delta v$ est directement proportionnelle au pouvoir dépolarisant ou dichroïque de l'objet à analyser 1.3. Il est ainsi possible de quantifier le caractère dépolarisant ou dichroïque de l'objet à analyser 1.3 en fonction de l'amplitude des oscillations présentes sur le signal électrique produit par la photodiode 1.5. Ce comportement reste valable, même si l'objet à analyser 1.3 présente une biréfringence et/ou entraîne une rotation des états de polarisation.

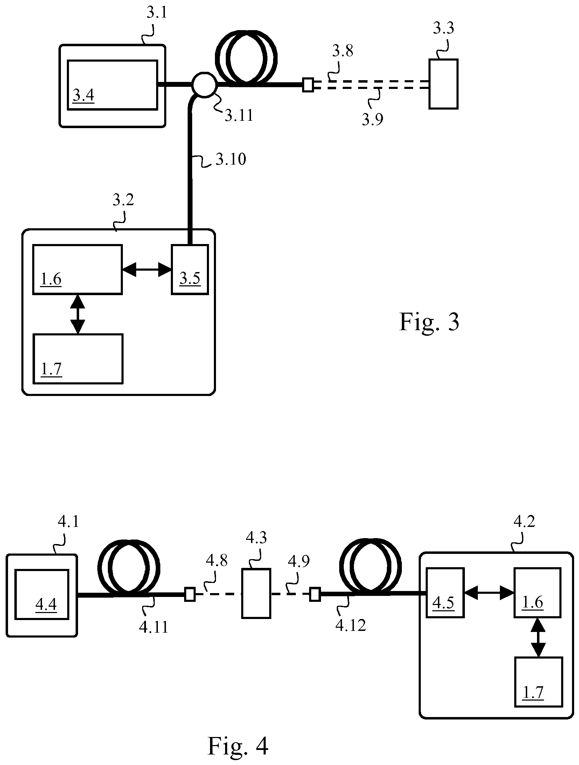

Il convient de noter que le système présenté en relation avec la Fig. 1, ainsi que ceux présentés par la suite en relation avec les Figs. 3 et 4, ne présente pas de polariseur, d'analyseur polariseur ou de cube polarisant en réception du faisceau lumineux 1.9 en amont de la photodiode 1.5. Ce système détermine le caractère dépolarisant ou dichroïque de l'objet à analyser 1.3 simplement en vérifiant si l'orthogonalité des états de polarisation des signaux aux fréquences $v_1$ et $v_2$ est conservée. Ce système n'effectue pas d'analyse des états de polarisation en tant que tels, et ne cherche ainsi pas à déterminer si ces états de polarisation sont linéaires, circulaires ou elliptiques, ni à vérifier si les états de polarisations des signaux du faisceau lumineux 1.8 généré par la source lumineuse 1.4 sont préservés dans le faisceau lumineux 1.9. Ce système permet donc une analyse rapide et à coût réduit de l'objet à analyser 1.3. De plus, ce système n'effectuant pas d'analyse d'état de polarisation en tant que tel, il permet de déporter, par rapport à la position de l'objet à analyser 1.3, la génération du faisceau lumineux servant à illuminer l'objet à analyser 1.3 et/ou déporter, par rapport à la position de l'objet à analyser 1.3, l'analyse du faisceau lumineux 1.9 résultant de la transmission/rétrodiffusion du faisceau incident 1.8 par l'objet à analyser 1.3. Les Figs. 3 et 4 présentent de tels déports par fibre optique.

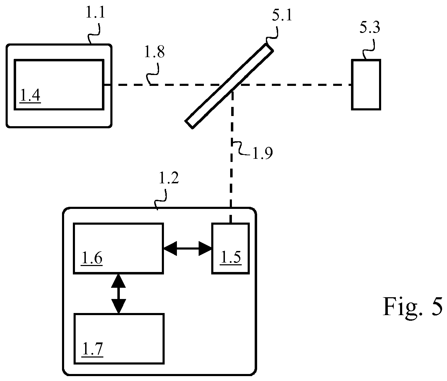

Pour que le dispositif récepteur 1.2 reçoive le faisceau lumineux rétrodiffusé par l'objet à analyser 1.3, il est possible d'utiliser un dispositif séparateur de lumière pour diriger ce faisceau lumineux vers le dispositif récepteur 1.2. Le dispositif séparateur de lumière ne doit pas introduire de dichroïsme ni de dépolarisation, de manière à ne pas avoir d'incidence sur l'analyse à effectuer. Une lame séparatrice 5.1 de faisceau lumineux peut être utilisée à cet effet, comme représenté à la Fig. 5, où le faisceau lumineux 1.9 rétroréfléchi d'un objet à analyser 5.3 est redirigé vers le dispositif récepteur 1.2 par la lame séparatrice 5.1. La lame séparatrice 5.1, bien que placée sur le chemin du faisceau lumineux 1.8, n'a pas d'incidence sur celui-ci.

Le système d'analyse, qu'il utilise ou non un déport par guide optique, qu'il utilise ou non un faisceau lumineux rétrodiffusé, est particulièrement adapté à l'imagerie polarimétrique. Dans ce cas, le système comporte des moyens pour générer une image complète ou partielle de l'objet à analyser à partir d'informations relatives au caractère dépolarisant ou dichroïque de plusieurs parties de l'objet à analyser. Il est ainsi possible de réaliser une succession de mesures en déplaçant l'objet à analyser grâce à une platine de positionnement piézo-électrique, ou tout autre dispositif de précision permettant de déplacer l'objet à analyser, le dispositif transmetteur 1.1 et le dispositif récepteur 1.2 étant maintenus en position.

Une autre possibilité consiste à utiliser des systèmes de pointage de faisceau par miroirs galvanométriques ou tout autre moyen pour contrôler et diriger successivement le faisceau d'illumination en différentes parties de l'objet à analyser, afin de balayer la totalité de l'objet ou de la partie de l'objet à analyser. Dans le cadre d'une illumination déportée par guide optique, il est possible d'utiliser un système de balayage du faisceau par miroirs galvanométriques qui serait placé en bout de guide optique.

Ainsi, le dispositif récepteur 1.2 obtient des informations relatives au caractère dépolarisant ou dichroïque de plusieurs parties de l'objet à analyser, et une image de l'objet à analyser est générée en fonction de ces informations.

Outre les diagnostiques biomédicaux déjà mentionnés, un tel système permet de distinguer entre matériau métallique et matériau isolant, ou d'effectuer des diagnostics d'états de surface.

Dans le cadre de l'imagerie polarimétrique, la photodiode 1.5 peut alors être remplacée par une matrice de photodiodes, un capteur CCD *(Charge-Coupled Device* en anglais ou *dispositif à transfert de charge* en français) ou un capteur CMOS *(Complementary Metal Oxide Semiconductor* en anglais, ou *semi-conducteur à oxyde de métal complémentaire* en français) et un faisceau de fibres optiques *(bundle* en anglais) peut être utilisé pour illuminer l'objet à analyser.

Le système d'analyse utilisant un faisceau lumineux rétrodiffusé, qu'il utilise ou non un déport par guide optique, est particulièrement adapté à l'analyse spectropolarimétrique. Le système comporte alors des moyens pour définir différentes valeurs des fréquences $\nu_1$ et $\nu_2$ de sorte qu'elles conservent le même écart $\Delta\nu$. Le dispositif transmetteur comporte alors des moyens pour modifier les fréquences $\nu_1$ et $\nu_2$ pour appliquer ces valeurs prédéfinies. Il est ainsi possible de couvrir une large bande spectrale, sans qu'il y ait modification de la fréquence de battement $\Delta\nu$. Le dispositif récepteur 1.2 obtient des informations relatives au caractère dépolarisant ou dichroïque de l'objet à analyser, ou d'une partie de l'objet à analyser, chacune de ces informations étant associée à un couple de fréquences $\nu_1$ et $\nu_2$. Le système comporte alors des moyens pour classifier l'objet à analyser, ou d'une partie de l'objet à analyser, dans une classification prédéfinie de matériaux, en fonction des informations obtenues.

La Fig. 2 illustre schématiquement un procédé de détermination du caractère dépolarisant ou dichroïque d'un objet.

Dans une étape 2.1, un dispositif transmetteur, tel que le dispositif transmetteur 1.1, génère un faisceau lumineux constitué de deux fréquences optiques distinctes $\nu_1$ et $\nu_2$ et à états de polarisation orthogonaux, et illumine un objet à analyser, ou une partie d'un objet à analyser, grâce à ce faisceau lumineux. Appelons ce faisceau lumineux *faisceau lumineux incident.*

Dans une étape 2.2 suivante, un dispositif récepteur, tel que le dispositif récepteur 1.2, reçoit un faisceau lumineux 1.9 en provenance de l'objet à analyser, suite à la transmission/rétrodiffusion du faisceau lumineux incident 1.8 sur l'objet à analyser 1.3. Appelons ce faisceau lumineux *faisceau lumineux résultant.*

Dans une étape 2.3 suivante, le dispositif récepteur détecte un signal à une fréquence $\Delta\nu$, dite fréquence de battement, prédéfinie en fonction des fréquences $\nu_1$ et $\nu_2$. Le dispositif récepteur détecte si un signal est présent ou pas à cette fréquence de battement $\Delta\nu$ et préférentiellement détermine l'amplitude de ce signal s'il est présent.

Dans une étape 2.4 suivante, le dispositif récepteur détermine le caractère dépolarisant ou dichroïque de l'objet à analyser, ou de la partie de l'objet à analyser, en fonction de la détection ou non d'un signal à la fréquence de battement $\Delta\nu$. En d'autres termes, le dispositif récepteur obtient une information relative au caractère dépolarisant ou dichroïque de l'objet à analyser ou de la partie de l'objet à analyser.

Le contrôle de transmission et réception de faisceau lumineux, la détection d'un signal à la fréquence de battement, l'obtention de l'information relative au caractère dépolarisant ou dichroïque, et les analyses subséquentes peuvent être implémentés sous forme logicielle par exécution d'un ensemble d'instructions par une machine programmable, tel qu'un DSP *(Digital Signal Processor* en anglais ou *Unité de Traitement de Signal Numérique* en français) ou un processeur, ou être implémentés sous forme matérielle par une machine ou un composant dédié, tel qu'un FPGA *(Field-Programmable Gate Array* en anglais ou *Matrice de Portes Programmable sur Champ* en français) ou un ASIC *(Application-Specific Integrated Circuit* en anglais ou *Circuit Intégré Spécifique à une Application* en français). Dans le cadre d'une mise en oeuvre sous forme logicielle, un processeur exécute des instructions chargées dans une mémoire vive RAM *(Random Access Memory* en anglais) à partir d'une mémoire morte ROM *(Read-Only Memory* en anglais), d'un support de stockage ou d'un réseau de communication. Ces instructions forment un programme d'ordinateur causant la mise en oeuvre d'au moins une des étapes susmentionnées.

La Fig. 3 illustre schématiquement un second mode de réalisation d'un système d'analyse par détermination du caractère dépolarisant ou dichroïque d'un objet 3.3.

La mise en oeuvre du système représenté à la Fig. 3 est similaire à celle du système de la Fig. 1, à ceci près qu'une fibre optique 3.10 est utilisée pour déporter, par rapport à la position de l'objet à analyser 3.3, la génération du faisceau lumineux servant à illuminer l'objet à analyser 3.3 et déporter, par rapport à la position de l'objet à analyser 3.3, l'analyse du faisceau lumineux 3.9 résultant de la transmission/rétrodiffusion du faisceau lumineux incident 3.8 par l'objet à analyser 3.3.

Le système comporte des dispositifs transmetteur 3.1 et récepteur 3.2.

Le dispositif transmetteur 3.1 comporte une source lumineuse 3.4 adaptée pour générer un faisceau lumineux constitué de signaux à deux fréquences optiques distinctes $\nu_1$ et $\nu_2$ et à états de polarisation orthogonaux. La source lumineuse 3.4 est en outre adaptée pour illuminer l'objet à analyser 3.3 via la fibre optique 3.10. L'objet à analyser 3.3 est ainsi illuminé par un faisceau incident 3.8 dont les états de polarisation peuvent être modifiés, à cause des biréfringences résiduelles de la fibre optique 3.10, par rapport au faisceau lumineux généré par la source lumineuse 3.4. Ces biréfringences résiduelles ne modifient cependant pas le caractère orthogonal des états de polarisation du faisceau lumineux.

Le dispositif récepteur 3.2 est adapté pour recevoir le faisceau lumineux résultant 3.9 en provenance de l'objet à analyser 3.3, suite à son illumination par le faisceau lumineux 3.8. Le dispositif récepteur 3.2 comporte préférentiellement une photodiode 3.5 dont la bande passante est adaptée pour mesurer un signal optique à la fréquence $\Delta\nu$. La photodiode 3.5 est reliée à la fibre optique 3.10 via laquelle le faisceau lumineux 3.9 est reçu et transporté. De la même manière que précédemment, les biréfringences résiduelles de la fibre optique 3.10 ne modifient pas le caractère orthogonal, ou non-orthogonal, des états de polarisation du faisceau lumineux résultant 3.9.

Un circulateur fibré 3.11 à trois voies peut être placé dans la fibre optique 3.10 ; la première voie est alors reliée à la partie de fibre du côté du dispositif transmetteur 3.1, la seconde voie à la partie de fibre du côté de l'objet à analyser 3.3 et la troisième voie à la partie de la fibre du côté du dispositif récepteur 3.2. Un coupleur fibré peut être utilisé en remplacement du circulateur fibré.

Afin de s'affranchir du circulateur ou du coupleur, deux fibres adjacentes peuvent être utilisées. La première est reliée au dispositif transmetteur et permet d'illuminer l'objet à analyser. La deuxième est reliée au dispositif récepteur et permet de transporter la lumière rétrodiffusée par l'objet ou une partie de l'objet à analyser.

Une fibre à plusieurs coeurs peut être avantageusement utilisée. Un coeur est relié au dispositif transmetteur et permet d'illuminer l'objet à analyser. Un ou plusieurs autre(s) coeur(s) est(sont) relié(s) au dispositif récepteur et permet(tent) de transporter la lumière rétrodiffusée par l'objet ou une partie de l'objet à analyser.

Comme précédemment, le dispositif transmetteur 3.1 peut être adapté pour illuminer une partie seulement de l'objet à analyser 3.3 et le dispositif récepteur 3.2 adapté pour recevoir le faisceau lumineux rétrodiffusé par cette partie de l'objet à analyser 3.3.

Le système représenté à la Fig. 3 est particulièrement adapté pour pratiquer des analyses lorsque l'objet à analyser est difficilement accessible, et est par exemple un système d'analyse endoscopique par images polarimétriques.

La Fig. 4 illustre schématiquement un troisième mode de réalisation d'un système d'analyse par détermination du caractère dépolarisant ou dichroïque d'un objet 4.3.

La mise en oeuvre du système représenté à la Fig. 4 est similaire à celle du système de la Fig. 1, à ceci près qu'une fibre optique 4.11 est utilisée pour déporter, par rapport à la position de l'objet à analyser 4.3, la génération du faisceau lumineux incident 4.8 servant à illuminer l'objet à analyser 3.3 et qu'une fibre optique 4.11 est utilisée pour déporter, par rapport à la position de l'objet à analyser 4.3, l'analyse du faisceau lumineux 4.9 résultant de l'illumination de l'objet à analyser 4.3.

Le système comporte des dispositifs transmetteur 4.1 et récepteur 4.2.

La fibre optique 4.11 ou la fibre optique 4.12 peut être omise. Dans ce cas, le dispositif transmetteur 4.1 est remplacé par le dispositif transmetteur 1.1, ou respectivement, le dispositif récepteur 4.2 est remplacé par le dispositif récepteur 1.2.

Le dispositif transmetteur 4.1 comporte une source lumineuse 4.4 adaptée pour générer un faisceau lumineux constitué de deux fréquences optiques distinctes $\nu_1$ et $\nu_2$ et à polarisations orthogonales. La source lumineuse 4.4 est en outre adaptée pour illuminer l'objet à analyser 4.3 via la fibre optique 4.11. L'objet à analyser 4.3 est ainsi illuminé par un faisceau incident 4.8 dont les états de polarisation peuvent être modifiés, à cause des biréfringences résiduelles de la fibre optique 4.11, par rapport au faisceau lumineux généré par la source lumineuse 4.4. Ces biréfringences résiduelles ne modifient cependant pas le caractère orthogonal des états de polarisation du faisceau lumineux.

Le dispositif récepteur 4.2 est adapté pour recevoir le faisceau lumineux 4.9 en provenance de l'objet à analyser 4.3, suite à son illumination par le faisceau lumineux 4.8. Le dispositif récepteur 4.2 comporte préférentiellement une photodiode 4.5 dont la bande passante est adaptée pour mesurer un signal optique à la fréquence $\Delta\nu$. La photodiode 4.5 est reliée à la fibre optique 4.12 via laquelle le faisceau lumineux 4.9 est reçu et transporté. De la même manière que précédemment, les biréfringences résiduelles de la fibre optique 4.12 ne modifient pas le caractère orthogonal, ou non-orthogonal, des états de polarisation du faisceau lumineux 4.9.

Comme précédemment, le dispositif transmetteur 4.1 peut être adapté pour illuminer une partie seulement de l'objet à analyser 4.3 et le dispositif récepteur 4.2 adapté pour recevoir le faisceau lumineux transmis par cette partie de l'objet à analyser 4.3.

Le système représenté à la Fig. 4 est particulièrement adapté pour pratiquer des analyses lorsque l'environnement, dans lequel l'objet à analyser est installé, devient hostile. Par exemple, le système est un système d'analyse de contraintes mécaniques ou de température subies par l'objet à analyser 4.3. Le caractère dichroïque de l'objet à analyser 4.3 évolue alors en fonction des contraintes mécaniques ou de température appliquées à l'objet à analyser 4.3. L'objet à analyser 4.3 peut par exemple dans ce cas être un capteur au polypropylène syndiotactique pour effectuer une analyse de contraintes mécaniques.

Un tel système d'analyse de contraintes mécaniques ou de température peut être mis en oeuvre sur la base du système présenté en relation avec la Fig. 3. Dans ce cas, un miroir peut être placé au-delà de l'objet à analyser 4.3 pour effectuer une rétroréflexion du faisceau lumineux.

**Revendications**

1. Système d'analyse par détermination d'un caractère dépolarisant ou dichroïque de tout ou partie d'un objet à analyser (1.3 ; 3.3 ; 4.3 ; 5.3), ledit système comportant un dispositif transmetteur (1.1 ; 3.1 ; 4.1) et un dispositif récepteur (1.2 ; 3.2 ; 4.2), **caractérisé en ce que** le dispositif transmetteur comporte :

   - des moyens (1.4 ; 3.4 ; 4.4) pour illuminer l'objet à analyser, ou une partie de l'objet à analyser, par un premier faisceau lumineux (1.8 ; 3.8 ; 4.8) constitué de deux fréquences optiques distinctes et à premiers états de polarisation orthogonaux ;

   et **en ce que** le dispositif récepteur comporte :

   - des moyens (1.6) pour détecter, dans un second faisceau lumineux à seconds états de polarisation (1.9 ; 3.9 ; 4.9) et résultant de l'illumination de l'objet à analyser par ledit premier faisceau lumineux, un signal à une fréquence de battement égale à un écart entre les deux fréquences optiques constituant ledit premier faisceau lumineux ;
   - des moyens (1.7) pour déterminer que ledit objet à analyser ou ladite partie de l'objet à analyser présente un caractère dépolarisant ou dichroïque dans le cas où un signal à la fréquence de battement est détecté et déterminer que ledit objet à analyser ou ladite partie de l'objet à analyser ne présente pas un caractère dépolarisant ou dichroïque sinon.

2. Système d'analyse selon la revendication 1, **caractérisé en ce que** les moyens pour déterminer que ledit objet à analyser ou ladite partie de l'objet à analyser présente un caractère dépolarisant ou dichroïque sont configurés pour déterminer l'amplitude du signal à la fréquence de battement et pour quantifier ledit caractère dépolarisant ou dichroïque à partir de ladite amplitude .

3. Système d'analyse selon l'une quelconque des revendications 1 et 2, **caractérisé en ce que** le dispositif transmetteur est adapté de sorte que les moyens pour illuminer l'objet à analyser, ou ladite partie de l'objet à analyser, effectuent l'illumination via un premier guide optique (3.10 ; 4.11).

4. Système d'analyse selon l'une quelconque des revendications 1 à 3, **caractérisé en ce que** le dispositif récepteur comporte des moyens (1.5 ; 3.5 ; 4.5) pour capter de la lumière et pour transformer un signal lumineux capté en un signal électrique, lesdits moyens étant à bande passante définie en fonction de la fréquence de battement.

5. Système d'analyse selon l'une quelconque des revendications 1 à 4, **caractérisé en ce que** le dispositif récepteur comporte des moyens pour recevoir le faisceau lumineux résultant de l'illumination de l'objet à analyser par ledit premier faisceau lumineux via un second guide optique (3.10 ; 4.12).

6. Système d'analyse selon les revendications 4 et 5, **caractérisé en ce que** le second guide optique est placé en amont des moyens pour capter de la lumière et pour transformer un signal lumineux capté en un signal électrique.

7. Système d'analyse selon l'une quelconque des revendications 1 à 6, **caractérisé en ce qu'**il comporte des moyens pour générer une image complète ou partielle de l'objet à analyser à partir de la détermination du caractère dépolarisant ou dichroïque de plusieurs parties de l'objet à analyser.

8. Système d'analyse selon l'une quelconque des revendications 1 à 6, **caractérisé en ce qu'**il comporte des moyens pour déterminer des valeurs de contraintes mécaniques ou de température appliquées à l'objet à analyser, à partir de la détermination du caractère dichroïque de l'objet à analyser.

9. Système d'analyse selon l'une quelconque des revendications 1 à 6, **caractérisé en ce qu'**il comporte des moyens pour modifier les fréquences optiques constituant ledit premier faisceau lumineux de sorte qu'elles conservent un même écart et des moyens pour classifier l'objet à analyser, ou ladite partie d'objet à analyser, en fonction de la détermination du caractère dépolarisant ou dichroïque de l'objet à analyser, ou de ladite partie d'objet à analyser, obtenues pour différents couples respectifs de fréquences constituant ledit premier faisceau lumineux.

10. Procédé d'analyse par détermination d'un caractère dépolarisant ou dichroïque de tout ou partie d'un objet à analyser (1.3 ; 3.3 ; 4.3 ; 5.3), ledit procédé étant mis en oeuvre par un système d'analyse comportant un dispositif transmetteur (1.1 ; 3.1 ; 4.1) et un dispositif récepteur (1.2 ; 3.2 ; 4.2), **caractérisé en ce que** le dispositif transmetteur effectue une étape consistant à :

   - illuminer (2.1) l'objet à analyser, ou une partie de l'objet à analyser, par un premier faisceau lumineux (1.8 ; 3.8 ; 4.8) constitué de deux fréquences optiques distinctes et à premiers états de polarisation orthogonaux ;

   et **en ce que** le dispositif récepteur effectue des étapes consistant à :

   - détecter (2.3), dans un second faisceau lumineux (1.9 ; 3.9 ; 4.9) à seconds états de polarisation et résultant de l'illumination de l'objet à analyser par ledit premier faisceau lumineux, un signal à une fréquence de battement égale à un écart entre les deux fréquences optiques constituant ledit premier faisceau lumineux ;

- déterminer (2.4) que ledit objet à analyser ou ladite partie de l'objet à analyser présente un caractère dépolarisant ou dichroïque dans le cas où un signal à la fréquence de battement est détecté ou déterminer (2.4) que ledit objet à analyser ou ladite partie de l'objet à analyser ne présente pas un caractère dépolarisant ou dichroïque sinon.

11. Procédé d'analyse selon la revendication 10, **caractérisé en ce que** déterminer que ledit objet à analyser ou ladite partie de l'objet à analyser présente un caractère dépolarisant ou dichroïque comprend une étape de détermination de l'amplitude du signal à la fréquence de battement et de quantification dudit caractère dépolarisant ou dichroïque à partir de ladite amplitude.

**Patentansprüche**

1. System zur Analyse durch Bestimmung eines depolarisierenden oder dichroitischen Charakters des gesamten oder eines Teils eines zu analysierenden Objekts (1.3; 3.3; 4.3; 5.3), wobei das System eine Sendevorrichtung (1.1; 3.1; 4.1) und eine Empfangsvorrichtung (1.2; 3.2; 4.2) umfasst, **dadurch gekennzeichnet, dass** die Sendevorrichtung umfasst:

- Mittel (1.4; 3.4; 4.4), um das zu analysierende Objekt oder einen Teil des zu analysierenden Objekts mit einem ersten Lichtstrahl (1.8; 3.8; 4.8) zu beleuchten, der aus zwei verschiedenen optischen Frequenzen besteht und orthogonale erste Polarisationszustände aufweist;

und **dadurch gekennzeichnet, dass** die Empfangsvorrichtung umfasst:

- Mittel (1.6), um in einem zweiten Lichtstrahl, der zweite Polarisationszustände (1.9; 3.9; 4.9) aufweist und aus der Beleuchtung des zu analysierenden Objekts mit dem ersten Lichtstrahl resultiert, ein Signal mit einer Schwebungsfrequenz gleich einer Differenz zwischen den beiden optischen Frequenzen, aus denen der erste Lichtstrahl besteht, zu detektieren;
- Mittel (1.7), um zu bestimmen, dass das zu analysierende Objekt oder der Teil des zu analysierenden Objekts einen depolarisierenden oder dichroitischen Charakter aufweist, wenn ein Signal mit der Schwebungsfrequenz detektiert wird, und anderenfalls zu bestimmen, dass das zu analysierende Objekt oder der Teil des zu analysierenden Objekts keinen depolarisierenden oder dichroitischen Charakter aufweist.

2. Analysesystem nach Anspruch 1, **dadurch gekennzeichnet, dass** die Mittel, um zu bestimmen, dass das zu analysierende Objekt oder der Teil des zu analysierenden Objekts einen depolarisierenden oder dichroitischen Charakter aufweist, dazu ausgestaltet sind, die Amplitude des Signals mit der Schwebungsfrequenz zu bestimmen und den depolarisierenden oder dichroitischen Charakter anhand der Amplitude zu quantifizieren.

3. Analysesystem nach einem der Ansprüche 1 und 2, **dadurch gekennzeichnet, dass** die Sendevorrichtung so angepasst ist, dass die Mittel, um das zu analysierende Objekt oder den Teil des zu analysierenden Objekts zu beleuchten, das Beleuchten über einen ersten optischen Leiter (3.10; 4.11) vornehmen.

4. Analysesystem nach einem der Ansprüche 1 bis 3, **dadurch gekennzeichnet, dass** die Empfangsvorrichtung Mittel (1.5; 3.5; 4.5) umfasst, um Licht aufzufangen und um ein aufgefangenes Lichtsignal in ein elektrisches Signal umzuwandeln, wobei die Mittel einen in Abhängigkeit von der Schwebungsfrequenz definierten Durchlassbereich aufweisen.

5. Analysesystem nach einem der Ansprüche 1 bis 4, **dadurch gekennzeichnet, dass** die Empfangsvorrichtung Mittel umfasst, um den Lichtstrahl, der aus der Beleuchtung des zu analysierenden Objekts mit dem ersten Lichtstrahl resultiert, über einen zweiten optischen Leiter (3.10; 4.12) zu empfangen.

6. Analysesystem nach den Ansprüchen 4 und 5, **dadurch gekennzeichnet, dass** der zweite optische Leiter stromauf der Mittel, um Licht aufzufangen und um ein aufgefangenes Lichtsignal in ein elektrisches Signal umzuwandeln, angeordnet ist.

7. Analysesystem nach einem der Ansprüche 1 bis 6, **dadurch gekennzeichnet, dass** es Mittel umfasst, um ein vollständiges oder partielles Bild des zu analysierenden Objekts anhand der Bestimmung des depolarisierenden oder dichroitischen Charakters von mehreren Teilen des zu analysierenden Objekts zu erzeugen.

8. Analysesystem nach einem der Ansprüche 1 bis 6, **dadurch gekennzeichnet, dass** es Mittel umfasst, um Werte mechanischer Spannungen oder Temperaturwerte, die an dem zu analysierenden Objekt vorliegen, anhand der Bestimmung des dichroitischen Charakters des zu analysierenden Objekts zu bestimmen.

9. Analysesystem nach einem der Ansprüche 1 bis 6, **dadurch gekennzeichnet, dass** es Mittel umfasst, um die optischen Frequenzen, aus denen der erste Lichtstrahl besteht, so zu ändern, dass sie die gleiche Differenz beibehalten, und Mittel, um das zu analysierende Objekt oder den Teil des zu analysierenden Objekts in Abhängigkeit von der Bestimmung des depolarisierenden oder dichroitischen Charakters des zu analysierenden Objekts oder des Teils des zu analysierenden Objekts zu klassifizieren, die für verschiedene jeweilige Paare von Frequenzen erhalten wurde, aus denen der erste Lichtstrahl besteht.

10. Verfahren zur Analyse durch Bestimmung eines depolarisierenden oder dichroitischen Charakters des gesamten oder eines Teils eines zu analysierenden Objekts (1.3; 3.3; 4.3; 5.3), wobei das Verfahren von einem Analysesystem durchgeführt wird, das eine Sendevorrichtung (1.1; 3.1; 4.1) und eine Empfangsvorrichtung (1.2; 3.2; 4.2) umfasst, **dadurch gekennzeichnet, dass** die Sendevorrichtung einen Schritt ausführt, der darin besteht:

   - das zu analysierende Objekt oder einen Teil des zu analysierenden Objekts mit einem ersten Lichtstrahl (1.8; 3.8; 4.8) zu beleuchten (2.1), der aus zwei verschiedenen optischen Frequenzen besteht und orthogonale erste Polarisationszustände aufweist;

   und dadurch, dass die Empfangsvorrichtung Schritte ausführt, die darin bestehen:

   - in einem zweiten Lichtstrahl (1.9; 3.9; 4.9), der zweite Polarisationszustände aufweist und aus der Beleuchtung des zu analysierenden Objekts mit dem ersten Lichtstrahl resultiert, ein Signal mit einer Schwebungsfrequenz gleich einer Differenz zwischen den beiden optischen Frequenzen, aus denen der erste Lichtstrahl besteht, zu detektieren (2.3);
   - zu bestimmen (2.4), dass das zu analysierende Objekt oder der Teil des zu analysierenden Objekts einen depolarisierenden oder dichroitischen Charakter aufweist, wenn ein Signal mit der Schwebungsfrequenz detektiert wird, und anderenfalls zu bestimmen (2.4), dass das zu analysierende Objekt oder der Teil des zu analysierenden Objekts keinen depolarisierenden oder dichroitischen Charakter aufweist.

11. Analyseverfahren nach Anspruch 10, **dadurch gekennzeichnet, dass** das Bestimmen, dass das zu analysierende Objekt oder der Teil des zu analysierenden Objekts einen depolarisierenden oder dichroitischen Charakter aufweist, einen Schritt des Bestimmens der Amplitude des Signals mit der Schwebungsfrequenz und des Quantifizierens des depolarisierenden oder dichroitischen Charakter anhand der Amplitude umfasst.

**Claims**

1. System of analysis by the determination of a depolarising or dichroic character of all or part of an object to be analysed (1.3; 3.3; 4.3; 5.3), said system comprising a transmitting device (1.1; 3.1; 4.1) and a receiving device (1.2; 3.2; 4.2), **characterised in that** the transmitting device comprises:

   - means (1.4; 3.4; 4.4) for illuminating the object to be analysed, or a part of the object to be analysed, by means of a first light beam (1.8; 3.8; 4.8) consisting of two distinct optical frequencies and with first orthogonal polarisation states;

   and **in that** the receiving device comprises:

   - means (1.6) for detecting, in a second light beam with second polarisation states (1.9; 3.9; 4.9) and resulting from the illumination of the object to be analysed by said first light beam, a signal at a beat frequency equal to a difference between the two optical frequencies constituting said first light beam;
   - means (1.7) for determining that said object to be analysed or said part of the object to be analysed has a depolarising or dichroic character in the case where a signal at the beast frequency is detected and determining that said object to be analysed or said part of the object to be analysed does not have a depolarising or dichroic character otherwise.

2. Analysis system according to claim 1, **characterised in that** the means for determining that said object to be analysed or said part of the object to be analysed has a depolarising or dichroic character are configured for determining the amplitude of the signal at the beat frequency and for quantifying said depolarising or dichroic character from said amplitude.

3. Analysis system according to either one of claims 1 and 2, **characterised in that** the transmitting device is adapted so that the means for illuminating the object to be analysed, or said part of the object to be analysed, effect the illumination via a first optical guide (3.10; 4.11).

4. Analysis system according to any one of claims 1 to 3, **characterised in that** the receiving device comprises means (1.5; 3.5; 4.5) for capturing light and for converting a captured light signal into an electrical signal, said means having a bandwidth defined according to the beat frequency.

5. Analysis system according to any one of claims 1 to 4, **characterised in that** the receiving device comprises means for receiving the light beam resulting from the illumination of the object to be analysed by said first light beam via a second optical guide (3.10; 4.12).

6. Analysis system according to claims 4 and 5, **characterised in that** the second optical guide is placed upstream of the means for capturing light and for converting a captured light signal into an electrical signal.

7. Analysis system according to any one of claims 1 to 6, **characterised in that** it comprises means for generating a complete or partial image of the object be analysed from the determination of the depolarising or dichroic character of several parts of the object to be analysed.

8. Analysis system according to any one of claims 1 to 6, **characterised in that** it comprises means for determining values of mechanical or temperature stresses applied to the object to be analysed, from the determination of the dichroic character of the object to be analysed.

9. Analysis system according to any one of claims 1 to 6, **characterised in that** it comprises means for modifying the optical frequencies constituting said first light beam so that they preserve the same difference and means for classifying the object to be analysed, or said object part to be analysed, according to the determination of the depolarising or dichroic character of the object to be analysed, or of said object part to be analysed, obtained for various respective pairs of frequencies constituting said first light beam.

10. Method of analysis by determination of a depolarising or dichroic character of all or part of an object to be analysed (1.3; 3.3; 4.3; 5.3), said method being implemented by an analysis system comprising a transmitting device (1.1; 3.1; 4.1) and a receiving device (1.2; 3.2; 4.2), **characterised in that** the transmitting device performs a step consisting of:

- illuminating (2.1) the object to be analysed, or a part of the object to be analysed, by means of a first light beam (1.8; 3.8; 4.8) consisting of two distinct optical frequencies and with first orthogonal polarisation states;

and **in that** the receiving device performs steps consisting of:

- detecting (2.3), in a second light beam (1.9; 3.9; 4.9) with second polarisation states and resulting from the illumination of the object to be analysed by said first light beam, a signal at a beat frequency equal to a difference between the two optical frequencies constituting said first light beam;
- determining (2.4) that said object to be analysed or said part of the object to be analysed has a depolarising or dichroic character in the case where a signal at the beast frequency is detected and determining (2.4) that said object to be analysed or said part of the object to be analysed does not have a depolarising or dichroic character otherwise.

11. Analysis method according to claim 10, **characterised in that** determining that said object to be analysed or said part of the object to be analysed has a depolarising or dichroic character comprises a step for determining the amplitude of the signal at the beat frequency and for quantifying said depolarising or dichroic character from said amplitude.

Fig. 1

Fig. 2

Fig. 3

Fig. 4

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2941047 A1

- US 20100103417 A